# EUROPÄISCHE PATENTANMELDUNG

(11) **EP 0 890 678 A1**
(43) Veröffentlichungstag der Anmeldung: **13.01.1999**
(21) Anmeldenummer: 98250249.4
(22) Anmeldetag: 08.07.1998
(51) Int. Cl.: E01B 9/68, C08J 9/32

(54) **Elastische Zwischenlage zur Schwingungsdämpfung**

(30) Priorität: 12.07.1997 DE 19729909
(71) Anmelder: Paul Müller Technische Produkte GmbH, 34212 Melsungen (DE)
(72) Erfinder: Achler, Rainer, 34212 Melsungen-Kirchhof (DE)
(74) Vertreter: Seewald, Jürgen, Dipl.-Ing.

(57) **Zusammenfassung**

Die vorliegenden Erfindung betrifft eine elastische Zwischenlage (7) zur Schwingungsdämpfung zur Einfassung zwischen einer im wesentlichen starren Auflage (1) und einem im wesentlichen starren, Schwingungen erzeugenden Körper (2). Es bestand die Aufgabe für eine derartige Zwischenlage, ein Material aufzuzeigen, welches die Nachteile der bisher verwendeten Materialien vermeidet und alle an die Zwischenlage gestellten Anforderungen zufriedenstellend erfüllt. Inbesondere soll das Material eine hohe Rücksteuerkraft und eine geringe innere Dämpfung aufweisen. Gelöst wird diese Aufgabe mittels einer Zwischenlage (7) aus einem thermoplastischen Elastomer, welcher durch Zugabe von handelsüblichen, expandierbaren Mikrohohlkörpern zu einem Schaumkunststoff mit geschlossenen Zellen geschäumt ist.

## Beschreibung

Die Erfindung betrifft eine elastische Zwischenlage zur Schwingungsdämpfung zur Einfassung zwischen einer im wesentlichen starren Auflage und einem im wesentlichen starren, Schwingungen erzeugenden Körper. Eine derartige Zwischenlage ist bekannt durch die DE 94 21 666 U1.

Derartige Zwischenlagen finden zur Dämpfung von Körperschall und Luftschall Anwendung z.B. bei der Aufstellung von Werkzeugmaschinen, Spritzgußmaschinen oder Waschmaschinen auf im wesentlichen starren Unterlagen wie Stahlplatten, Eisenträgern oder Betonflächen.

Ein bevorzugtes Anwendungsgebiet dieser Zwischenlagen sind Gleisoberbauten für Schienenfahrzeuge. Bei derartigen Gleisoberbauten treten durch die Überfahrt von Zügen über das Gleis unvermeidbar Schwingungen auf, die sich ohne besondere Gegenmaßnahmen störend auf den Betrieb der Schienenfahrzeuge auswirken. Diese Schwingungen bewirken einen erhöhten Verschleiß an den Schienenfahrzeugen, eine schnelle Verschlechterung der Gleisanlage durch Schotterzerstörung und einen gesonderten Fahrkomfort durch Vibrationen im Zuginnern. Zur Dämpfung derartiger Schwingungen und zur Erzielung eines elastischen, störungsfreien Zuglaufs werden plattenförmige Zwischenlagen der beschriebenen Art zwischen der Schienenauflage und dem Schienenfuß eingefaßt.

An diese zwischenlagen wird eine Reihe sehr unterschiedlicher und strenger Anforderungen gestellt. Diese beziehen sich insbesondere auf hohe Dämpfungseigenschaften auch im hochfrequenten Bereich zur Dämpfung von Luftschallemissionen, eine lange Lebensdauer, z.B. zur Verringerung der Instandhaltungskosten einer Gleisanlage, volle Funktionsfähigkeit über einen weiten Temperaturbereich von -20°C bis +50°C, eine gute Beständigkeit gegen Eis, Wasser, Öl, Weichenschmierstoff, Ozon, Alterungs- und UV-Einflüsse sowie auf gute Recycelbarkeit.

Es ist bekannt, eine derartige Zwischenlage aus geschäumtem und vernetztem Polyurethan mit offener Zellstruktur herzustellen. Ein solches Material ermöglicht jedoch das Eindringen von Wasser und somit eine Eisbildung in der Zwischenlage im Winter. Dadurch erhöht sich bei sinkenden Temperaturen die Federkennsteifigkeit. Auch ist dieses Material nicht recycelfähig.

Es ist auch bekannt, für die Zwischenlage ein thermoplastisches PUR mit Noppenstruktur zu wählen. Dabei ist aber die dynamische Flexibilität bei Raumtemperatur und bei Kälte unbefriedigend.

Es ist ferner bekannt, die Zwischenlage aus Gummi herzustellen. Gummi hat jedoch einen erhöhten mechanischen Abrieb und eine unzureichende Kälterflexibilität. Eine Gummimischung mit verbesserter Kälteflexibilität ist andererseits nicht mehr ausreichend ölbeständig. Eine Gummimischung, die sowohl kälteflexibel, ölbeständig als auch abriebfest ist, ist zwar realisierbar, aber sehr teuer. Außerdem erfährt Gummi eine dynamische Verhärtung bei hohen Frequenzen der einwirkenden Schwingungen und ist auch nicht recycelfähig.

Alle bisher bekannten und angewendeten Materialien für derartige Zwischenlagen waren bislang nicht in der Lage, alle an das Material gestellten Anforderungen in einem ausreichenden Maße zu erfüllen.

Der Erfindung liegt die Aufgabe zugrunde, für eine derartige Zwischenlage ein Material aufzuzeigen, daß die Nachteile der bisher verwendeten Materialien vermeidet und alle an die Zwischenlage gestellten Anforderungen zufriedenstellend erfüllt. Insbesondere soll das Material eine hohe Rückstellkraft und eine geringe innere Dämpfung aufweisen.

Diese Aufgabe wird erfindungsgemäß dadurch gelöst, daß die Zwischenlage aus einem thermoplastischen Elastomer besteht, welches durch Zugabe von handelsüblichen, expandierbaren Mikrohohlkörpern zu einem Schaumkunststoff mit geschlossenen Zellen geschäumt ist. Bevorzugt wird als Matrixkunststoff Polyetherester (TEEE) vorgeschlagen.

Es hat sich gezeigt, daß gerade das als Grundmaterial dienende Polyetherester besonders gute Elastizitätswerte von -40°C bis +80°C aufweist. Dennoch würde dieses Material alleine die erforderlichen Einsenkungen und Rückstellkräfte für die Zwischenlage nicht gewährleisten. Deshalb wird dieses Material unter Zugabe von Mikrohohlkörpern geschäumt. Derartige Mikrohohlkörper oder sogenannte Mikroperls sind im Ausgangszustand unexpandierte Hohlkugeln, die sich während der Verarbeitung auf dem Extruder zu Gasblasen mit einem Durchmesser von 0,05 bis 0,1 mm aufblähen. Diese Gasblasen stehen unter Druck und bewirken zusammen mit dem Grundmaterial folgende vorteilhafte Wirkungen bezüglich der Schwingungsdämpfung:

Die geschlossenen Zellen stellen die notwendige Einsenkung des Schwingungsdämpfers zur Verfügung. Da die Gaszellen des Schaumkunststoffs geschlossen sind und unter Druck stehen, erhöhen sie die Elastizität des Dämpfungsmaterials erheblich. Dadurch, daß die Gasblasen geschlossen sind, können sie kein Wasser aufnehmen, so daß eine Eisbildung im Winter verhindert wird. Das Material bleibt in seiner Qualität und seinen mechanischen Eigenschaften auch über längere Zeiträume weitestgehend konstant. Durch Zugabe der Mikrohohlkörper zu dem Grundmaterial vor der Verarbeitung, also durch eine genaue Dosierung, kann der Verschäumungsgrad genau eingestellt werden. Dadurch werden die Einsenkungen unter Last und damit die statische und dynamische Federkennziffer von Schwingungsdämpfer zu Schwingungsdämpfer exakt gleich groß, was für die Schallisolation besonders vorteilhaft ist. Die jeweils gewünschten Federkennziffern des Materials können durch einfache Änderung der Dosierung der Mikroperls in dem Material eingestellt werden.

Vorzugsweise werden die Zwischenlagen in Platten mit größeren Abmessungen ausgeführt. Durch die hohen mechanischen Festigkeitswerte werden bei gegebenen Auflageflächen für die Schwingungselemente Nuten an der Unterseite eingebracht. Dadurch wird die Flächenpressung erhöht und die gewünschte Einsinktiefe unter Vorlast und Verkehrslast eingestellt. Ein weiterer Vorteil liegt in der Materialreduktion.

Anhand einer Zeichnung wird die Anwendung einer erfindungsgemäßen Zwischenlage für einen Gleisaufbau für Schienenfahrzeuge erläutert.

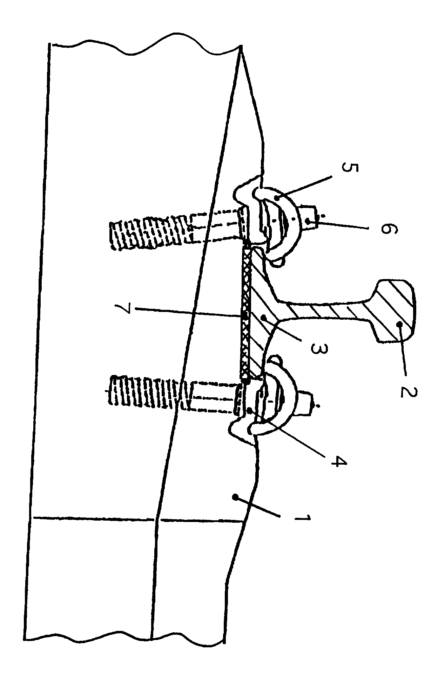

Die einzige Figur dieser Zeichnung zeigt eine Betonschwelle 1 für einen Gleisoberbau. Anstelle einer Betonschwelle kann auch eine Stahlunterlage oder eine durchgehende Betonfläche vorgesehen sein. Auf der Betonschwelle 1 ist eine Schiene 2 gelagert. Der Schienenfuß 3 der Schiene 1 wird durch sogenannte Winkelführungsplatten 4 in waagerechter Richtung geführt. Die Festspannung der Schiene 2 auf der Betonschwelle 1 in senkrechter Richtung erfolgt durch federnde Klammern 5, die durch Schrauben 6 auf die Betonschwelle 1 gespannt sind. Die Klammern 5 stützen sich jeweils mit einem Ende auf der Winkelführungsplatte 4 und mit dem anderen Ende auf der Oberkante des Schienenfußes 3 ab.

Zwischen der die Schiene 2 tragenden Oberfläche der Betonschwelle 1 und der Unterkante des Schienenfußes 3 ist eine zur Dämpfung dienende rechteckförmige Zwischenlage 7 vorgesehen, deren Abmessungen etwa der Breite des Schienenfußes 3 und der Breite der Betonschwelle 1 entsprechen. Die Zwischenlage 7 besteht aus einem thermoplastischen Polyetherester (TEEE), das durch Zugabe von Mikrohohlkörpern zu einem Schaumkunststoff mit geschlossenen Zellen geschäumt ist. Die Zwischenlage 7 kann an ihrer auf der Betonschwelle 1 aufliegenden Unterseite noch mit Nuten versehen sein. Dadurch kann die Flächenpressung auf der Auflage erhöht und die gewünschte Einsinktiefe unter Vorlast und Verkehrslast beeinflußt werden.

## Patentansprüche

1. Elastische Zwischenlage (7) zur Schwingungsdämpfung zur Einfassung zwischen einer im wesentlichen starren Auflage (1) und einem im wesentlichen starren, Schwingungen erzeugenden Körper (2), dadurch gekennzeichnet, daß die Zwischenlage (7) aus einem thermoplastischen Elastomer besteht, welche durch Zugabe von handelsüblichen, expandierbaren Mikrohohlkörpern zu einem Schaumkunststoff mit geschlossenen Zellen geschäumt ist.

2. Elastische Zwischenlage nach Anspruch 1, dadurch gekennzeichnet, daß der thermoplastische Elastomer ein Polyetherester (TEEE) ist.

3. Zwischenlage nach Anspruch 1 oder 2, dadurch gekennzeichnet, daß die Zwischenlage (7) an ihrer auf der Auflage (1) aufliegenden Unterseite mit Nuten versehen ist.

4. Zwischenlage nach einem der vorstehenden Ansprüche, dadurch gekennzeichnet, daß die Zwischenlage Abmessungen zur Einfassung zwischen der Schienenauflage (1) und dem Schienenfuß (3) eines Gleisoberbaus aufweist.
